**Europäisches Patentamt**

**European Patent Office**

**Office européen des brevets**

(19)

(11) Veröffentlichungsnummer : **0 524 201 B1**

(12)

# EUROPÄISCHE PATENTSCHRIFT

(45) Veröffentlichungstag der Patentschrift :
**18.05.94 Patentblatt 94/20**

(51) Int. Cl.$^5$ : **G01N 3/40**, G01N 29/00

(21) Anmeldenummer : **91905798.4**

(22) Anmeldetag : **22.03.91**

(86) Internationale Anmeldenummer :
**PCT/DE91/00256**

(87) Internationale Veröffentlichungsnummer :
**WO 91/15747 17.10.91 Gazette 91/24**

(54) **VERFAHREN ZUR HÄRTEMESSUNG NACH DER ULTRASCHALL-KONTAKT-IMPEDANZ-METHODE.**

(30) Priorität : **07.04.90 DE 4011313**

(43) Veröffentlichungstag der Anmeldung :
**27.01.93 Patentblatt 93/04**

(45) Bekanntmachung des Hinweises auf die
Patenterteilung :
**18.05.94 Patentblatt 94/20**

(84) Benannte Vertragsstaaten :
**DE FR GB IT**

(56) Entgegenhaltungen :
**DE-C- 3 504 535**
**DE-C- 3 720 625**
**US-A- 3 153 338**

(73) Patentinhaber : **KRAUTKRÄMER GmbH & Co.**
**Robert-Bosch-Strasse 3**
**D-50354 Hürth (DE)**

(72) Erfinder : **SCHILLER, Jörg**
**Rochusstrasse 14**
**D-5354 Weilerswist-Mückenhausen (DE)**
Erfinder : **HALIM, Alexander**
**Ulhaus 35**
**D-5163 Langerwehe (DE)**

(74) Vertreter : **Bauer, Wulf, Dr.**
**Bayenthalgürtel 15**
**D-50968 Köln (Marienburg) (DE)**

EP 0 524 201 B1

Jouve, 18, rue Saint-Denis, 75001 PARIS

**Beschreibung**

Die Erfindung bezieht sich auf ein Verfahren zur Messung der Härte oder elastischer Materialeigenschaften unter Last nach der Ultraschall-Kontakt-Impedanz-Methode, bei dem ein stabförmiger Resonator, der an einem freien Ende einen Eindringkörper trägt, mit einer vorgegebenen Prüfkraft gegen eine zu messende Probe gedrückt wird, wobei der Eindringkörper in die Probe eindringt, und die dadurch bedingte Änderung df der Frequenz f des Resonators gemessen wird und hieraus über eine Umwerteformel mittels der bekannten Werte für den Härtewert HV (bzw. für den Elastizitätsmodul E und für die Querkontraktionszahl $\mu$) der Probe entweder der Elastizitätsmodul E oder der Härtewert HV ermittelt wird.

Das Verfahren der eingangs genannten Art zur Härteprüfung ist aus der DE-A-39 34 578 bekannt, die sich ihrerseits auf die grundlegende US-Patentschrift 31 53 338 für das Resonanzverfahren zur Härteprüfung bezieht. Dieses Verfahren wird häufig als UCI- (ultrasonic contact-impedance)-Verfahren bezeichnet. Theoretische Grundlagen zu diesem Verfahren sind in dem Aufsatz von Gladwell und Kleesattel "The contact-impedance meter-2" in Ultrasonics, Oktober 1968, Seite 244 bis 250, enthalten.

Mit Hilfe des Härteprüfverfahrens der eingangs genannten Art (DE-A-39 34 578) soll insbesondere für Serienteile mit geringer mechanischer Reaktanz der Härtewert bestimmt werden. Hierzu wird zunächst zur Kalibrierung an mehreren Härtevergleichsplatten jeweils ein Eindruck ausgeführt, der sowohl UCI-mäßig, als auch optisch (nach dem Vickers-Verfahren) vermessen wird. Aus den erhaltenen Werten und dem bekannten Härtewert der Härtevergleichsplatten werden Koeffizienten einer Korrekturfunktion höheren Grades für die UCI-Messung und mindestens einer Korrekturfunktion mindestens ersten Grades für die optische Messung ermittelt. Werden auf den Serienteilen dann Eindrücke erzeugt, die sowohl UCI-mäßig als auch optisch ausgemessen werden, so kann aus dem Verhältnis des pro Eindruck erhaltenen optischen und UCI-Meßwertes jeweils ein Korrekturfaktor ermittelt werden und können anschliepend die anderen Serienteile an möglichst gleichen Koordinaten der Oberfläche lediglich UCI-mäßig härtebestimmt werden. Dadurch wird diese Härtemessung wesentlich vereinfacht und beschleunigt.

Die benutzte Korrektur ist im wesentlichen empirisch und auf die spezifische Eigenschaft der Probe zugeschnitten. Ändert sich die Probengeometrie, muß der gesamte Kalibrierungsvorgang neu ablaufen. Insbesondere ist es aber nicht möglich, mit dem vorbekannten Verfahren die Reaktanz der Probe zu ermitteln. Die Reaktanz wird lediglich als Störfaktor angesehen, nicht aber tatsächlich erfaßt.

Hier setzt nun die Erfindung ein. Sie hat es sich zur Aufgabe gemacht, das UCI-Verfahren der eingangs genannten Art dahingehend weiterzuentwickeln, daß die Reaktanz der Probe erfaßt und damit noch präziser im Meßergebnis für den Härtewert oder den Elastizitätsmodul berücksichtigt werden kann.

Diese Aufgabe wird ausgehend von dem Verfahren der eingangs genannten Art dadurch gelöst, daß für die Probe die Frequenzänderung df bei zumindest zwei unterschiedlichen Prüfkräften gemessen wird und daß die so gemessenen Frequenzänderungen df jeweils in eine Umwerteformel der Form

$$HV = G(df, a, R_o, b) \quad (1)$$

eingesetzt werden, in der a eine probenunabhängige, apparative Konstante, $R_o$ die Reaktanz der Probe und b ein den Elastizitätsmodul E und die Querkontraktionszahl $\mu$ enthaltender Term sind, wobei sich eine der Zahl der Prüfkräfte entsprechende Anzahl von linearen Gleichungen ergibt, aus denen einerseits entweder der Härtewert HV oder der Term b unabhängig von der Reaktanz $R_o$ oder andererseits die Reaktanz $R_o$ bei bekanntem Härtewert oder Term b ermittelt wird.

Die Umwerteformel (1) ergibt sich aus dem von Gladwell und Kleesattel gemachten Ansatz in der ersten Gleichung dieses Aufsatzes, indem jedoch die Reaktanz ausdrücklich nicht vernachlässigt wird. Die neue Umwerteformel ermöglicht es, die Reaktanz $R_o$ einer Probe, die im wesentlichen durch die Probengeometrie gegeben ist, durch mindestens zwei Messungen mit unterschiedlichen Prüfkräften zu bestimmen. Weiterhin kann dann mit dieser Umwerteformel die Querkontraktionszahl, der Härtewert HV oder der Elastizitätsmodul E bestimmt werden, sofern zwei dieser drei Größen bekannt sind.

Das erfindungsgemäße Verfahren hat bei der praktischen Prüfung, beispielsweise auf Härte oder Elastizitätsmodul, entscheidende Vorteile. Anstelle der individuellen Kompensation der Probengeometrie (bei ansonsten konstanten Materieparametern) muß nicht für jede einzelne Probengeometrie eine individuelle Korrektur durchgeführt werden, vielmehr genügt eine einmalige Einstellung und kann unabhängig von der jeweiligen Geometrie (bei gleichem bzw. ähnlichem Material) die gewünschte Messung durchgeführt werden.

In ansich bekannter Weise kann das erfindungsgemäße Verfahren mit einem weiteren, zweckmäßigerweise automatisierten Härteprüfverfahren kombiniert werden, beispielsweise einer optischen Ausmessung des verfahrensmäßig erzeugten Härteprüfeindrucks, nach Entfernen des Resonators. Auf diese Weise läßt sich bei bekannter Querkontraktionszahl der Elastizitätsmodul einer Probe unmittelbar erfassen.

Nach dem erfindungsgemäßen Verfahren ist zur Kalibrierung einer Härteprüfeinrichtung nach dem UCI-Verfahren nur die Bestimmung der Koeffizienten a und b notwendig, da bei Härtevergleichsplatten, wie sie

2

für die Kalibrierung verwendet werden, die Härte bekannt und der Elastizitätsmodul sowie die Querkontraktionszahl ermittelbar sind. Die beiden Koeffizienten a und b lassen sich mit nur zwei (anstelle von bisher drei) Kalibrationsmessungen bestimmen. Eine dritte Härtevergleichsplatte, wie sie bei Verwendung der bisher benutzen Umwerteformel nach dem Stand der Technik notwendig ist, entfällt.

Bei Messung von Materialien mit stark abweichendem Elastizitätsmodul, für die keine Härtevergleichsplatten zur Kalibrierung zur Verfügung stehen, bedeutet dies eine erhebliche Zeit- und Kosteneinsparung, da die Präparation und das optische Ausmessen von Referenzproben zur Kalibrierung allgemein sehr zeitintensiv sind.

In Weiterbildung der Erfindung wird vorgeschlagen, daß der Eindringkörper zunächst mit einer ersten Kraft gegen die Probe gedrückt wird und die zugehörige Frequenzänderung gemessen wird, und anschliepend die Andrückkraft auf einen höheren, zweiten Wert gesteigert und bei diesem wiederum die Frequenzverschiebung df gemessen wird. Durch derartiges, stufenweises Erhöhen der Kraft in ein- und demselben Eindruck werden Wertepaare erhalten, über die eine präzisere Bestimmung der gewünschten Größen, z. B. des Härtewertes, möglich ist. Die schrittweise Steigerung der Andrückkraft ermöglicht auch eine deutliche Abkürzung des Verfahrensablaufs, da mechanische Zwischenschritte, wie z. B. Verschieben des Resonators, nicht notwendig sind. Die mehrschrittige Messung benötigt daher nur unwesentlich mehr Zeit als für die ansich bekannte Messung nach dem Stand der Technik mit nur einer Prüfkraft (Andrückkraft) pro Eindruck.

Weitere Vorteile und Merkmale der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung näher erläutert wird. In dieser zeigen:

Fig. 1    eine prinzipielle Darstellung des erfindungsgemäßen Härteprüfgeräts in Seitendarstellung und mit einer Probe und

Fig. 2    ein Diagramm für den Ablauf einer Messung mit vier unterschiedlichen Prüfkräften.

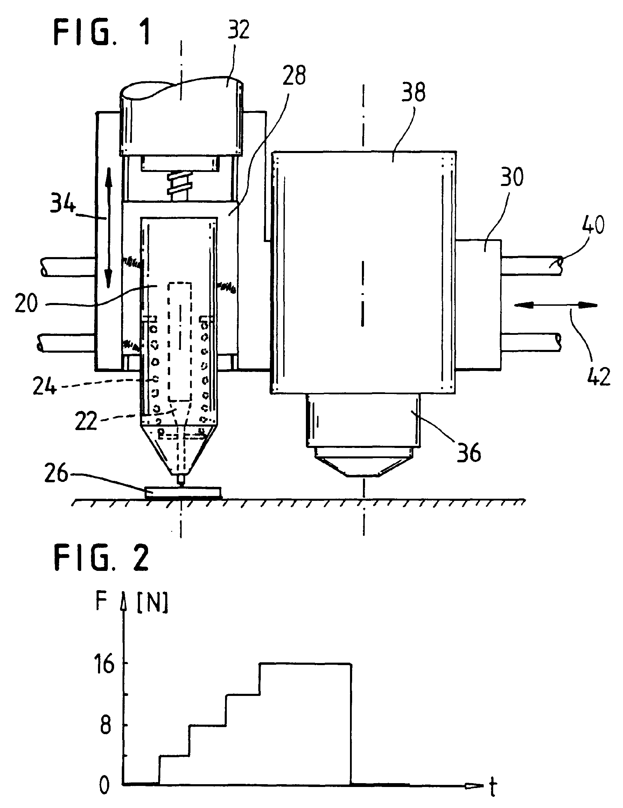

Von einem ansich bekannten Härteprüfgerät, wie es beispielsweise aus der DE-C-37 20 625 bekannt ist, sind in Figur 1 dargestellt eine Sonde 20, in der sich ein stabförmiger Resonator 22 befindet, an dessen freiem, unteren, aus dem Sondengehäuse herausragenden Ende ein Vickers-Eindringkörper befestigt ist. In ansich bekannter Weise ist der im Sondengehäuse längsverschiebbare Resonator 22 gegenüber dem Sondengehäuse durch eine Feder 24 abgestützt.

Die Sonde 20 ist auf einem Schlitten 28 befestigt, der vertikal verschiebbar und über eine Längsführung geführt an einem Hauptschlitten 30 angeordnet ist. Mittels eines Elektromotors 32, der über eine Schraubspindel mit dem Schlitten 28 verbunden ist und selbst am Hauptschlitten 30 befestigt ist, kann die Sonde 20 im Sinne des Doppelpfeils 34 auf- und abbewegt werden.

Wird die Sonde mittels des Elektromotors 32 für eine Erstberührung gegen die Probe 26 in die in Figur 1 gezeigte Position gefahren, läßt sich der Zustand der Erstberührung an einem Frequenzsprung, aber auch alternativ an einem Amplituden- oder Phasensprung in der Schwingung des Resonators 22 feststellen. Wird nun ausgehend von diesem Zustand die Sonde 20 über den vom Elektromotor 32 angetriebenen Schlitten 28 weiter gegen die Probe 26 gedrückt, verkürzt sich die Feder 24 zunehmend. Die dabei resultierende Verschiebung zwischen Resonator 22 und Sondengehäuse kann durch eine Längenmessung erfaßt werden, jeder Länge entspricht eine Kraft. Andererseits kann auch eine Kraftmepeinrichtung an einem Ende der Feder vorgesehen sein.

Schließlich ist am Hauptschlitten 30 noch ein Mikroskopobjektiv 36 mit aufgesetzter Videokamera 38 befestigt, wie Fig. 1 zeigt, sind die Sonde 20 und die optische Anordnung 36, 38 achsenparallel zueinander ausgerichtet. Der Hauptschlitten ist in einer horizontalen Längsführung 40 verschiebbar im Sinne des Doppelpfeiles 42 angeordnet. Im gezeigten Ausführungsbeispiel weist die Längsführung 40 zwei parallele Rundstangen auf. Von der Längsführung 40 haben die Achsen des Resonators 22 und der optischen Anordnung 36, 38 denselben Abstand. Der Hauptschlitten 30 kann um den Abstand der Achsen des Resonators 22 und des Objektivs 36 entlang der Längsführung 40 verschoben werden, an beiden Enden des Verschiebeweges sind nicht dargestellte, einstellbare Anschläge vorgesehen. Die Anordnung ist so getroffen, daß bei Verschieben von einem Anschlag zum anderen der Ort, an dem der Vickers-Eindringkörper einen Eindruck hinterlassen hat, exakt zentrisch in der Mitte des Objektivs 36 erscheint. Dadurch kann ein Eindruck, der zunächst durch Eindrücken des Eindringkörpers des Resonators 22 in die Probe 26 erhalten wurde, nach Anheben des Resonators 22 und Verschieben des Hauptschlittens 30 optisch, also nach dem Vickers-Verfahren, ausgemessen werden.

Durch schrittweises Absenken des Sondengehäuses gegenüber dem Resonator 22 bzw. der mit ihm in Kontakt stehenden Probe 26 wird die Feder 24 schrittweise weiter zusammengedrückt, wodurch sich der aus Fig. 2 gezeigte Verlauf ergibt. Dargestellt sind ausgehend von der Erfassung des Erstkontaktes (Prüfkraft F = 0) das schrittweise Aufbringen von Prüfkräften der Größe 4 N, 8 N, 12 N und 16 N. Nach Anlegen der höchsten Prüfkraft wird der Resonator 22 nach einer gewissen Zeit wieder angehoben, indem der Elektromotor 32 den Schlitten 28 wieder nach oben zieht. Dadurch fällt die Prüfkraft wieder auf den Wert F = 0 ab.

Bei jeder der vier angelegten Prüfkräfte ergibt sich eine Frequenzverschiebung df der Resonanzfrequenz f des Resonators 22. Aus den Wertepaaren $F_1, df_1$; $F_2, df_2$ ... $F_4, df_4$ lassen sich zu messende Parameter ableiten, worauf im folgenden eingegangen wird:

Die Umwerteformel (1) läßt sich in folgender Form darstellen:

$$HV \; (UCI) \; = \; \frac{F}{\{g_n\}b^2} \; \left[ \frac{a}{n} \; + \; \frac{1}{R_o \cdot m} \right]^2 \qquad\qquad (2)$$

Hierbei ist:

F Prüflast in N,

n und m Funktionen der UCI-Frequenzverschiebung df und $\{g_n\}$ Mapzahl der Fallbeschleunigung (= 9,81).

In die Formel (2) werden nun mindestens zwei Wertepaare eingesetzt, wodurch sich zwei lineare Gleichungen ergeben:

$$HV \; (UCI) \; = \; \frac{F_1}{\{g_n\}b^2} \; \left[ \frac{a}{n_1} \; + \; \frac{1}{R_o \cdot m_1} \right]^2 \qquad\qquad (2a)$$

$$HV \; (UCI) \; = \; \frac{F_2}{\{g_n\}b^2} \; \left[ \frac{a}{n_2} \; + \; \frac{1}{R_o \cdot m_2} \right]^2 \qquad\qquad (2b)$$

Wenn die Konstante a nicht bekannt ist, kann sie auch nach dem erfindungsgemäßen Verfahren erhalten werden durch Ausmessen eines Vickers-Eindrucks, der z. B. stufenweise durch mindestens zwei Prüfkräfte auf einer Härtevergleichsplatte mit bekanntem Härtewert sowie bekanntem Wert des Termes b erzeugt wird.

Aus dem angegebenen Gleichungssystem (2a) und (2b) lassen sich die Reaktanz $R_o$ und entweder der Härtewert HV oder der materialabhängige Term b nun für beliebige Proben bestimmen. Aus b kann der Elastizitätsmodul (auch Dehnungsmodul bzw. E-Modul genannt) E erhalten werden, wenn die Querkontraktionszahl bekannt ist, und zwar aus der Gleichung

$$b \; = \; 0{,}93/E_{eff}(\text{Werkstoff}) \; + \; k/E_{eff}(\text{Eindringkörper}) \qquad (3)$$

mit $E_{eff} = E/(1 - \mu^2)$, wobei $\mu$ = Querkontraktionszahl (Poissonzahl) und k eine formabhängige Konstante des Eindringkörpers ist. Da der Elastizitätsmodul des Eindringkörpers wesentlich gröper als k ist, kann der Term $k/E_{eff}$(Eindringkörper) vernachlässigt werden. Hieraus ergibt sich

$$E \; = \; 0{,}93 \, (1 \, - \, \mu^2)/b.$$

Bei Proben mit unendlich großer Probenreaktanz (große Masse, Dämpfung) ist im allgemeinen schon eine Messung bei nur einer Prüfkraft (z. B. $F_1$) ausreichend.

In einer alternativen Ausbildung kann die Prüfkraft auch dadurch gesteigert werden, daß auf die Sonde Gewichte aufgelegt werden. Auch dies kann motorisch erfolgen, indem beispielsweise mit einer Spindel ein Gewicht abgesenkt und auf die Sonde aufgelegt wird.

Für die Durchführung des erfindungsgemäßen Verfahrens ist es nicht notwendig, daß - wie oben beschrieben - ein- und derselbe Eindruck mit mindestens zwei verschiedenen Prüfkräften, allerdings mit steigender Prüfkraft, UCI-mäßig ausgemessen wird. Es können auch zwei verschiedene Sonden, die auf unterschiedliche Prüfkräfte ausgelegt sind und beispielsweise ebenfalls entsprechend der genannten DE-C-37 20 625 ausgebildet sind, eingesetzt werden. Hierbei hat jedoch in der Regel jede Sonde ihre eigene apparative Konstante a.

Anstelle einer schrittweisen Erhöhung der Prüfkraft kann die Prüfkraft auch kontinuierlich gesteigert und die jeweils zugehörige Frequenzverschiebung df dabei erfaßt werden.

**Patentansprüche**

1. Verfahren zur Messung der Härte oder elastischer Materialeigenschaften unter Last nach der Ultraschall-Kontakt-Impedanz-Methode, bei der ein stabförmiger Resonator, der an einem freien Ende einen Eindringkörper trägt, mit einer vorgegebenen Prüfkraft gegen eine zu messende Probe gedrückt wird, wobei der Eindringkörper in die Probe eindringt, und die dadurch bedingte Änderung df der Frequenz f des Resonators gemessen wird und hieraus über eine Umwerteformel mittels der bekannten Werte für den Elastizitätsmodul E (bzw. für den Härtewert HV) und die Querkontraktionszahl $\mu$ der Probe der Härtewert HV (bzw. der Elastizitätsmodul E) ermittelt wird, dadurch gekennzeichnet, daß für die Probe die Frequenzänderung df bei zumindest zwei unterschiedlichen Prüfkräften gemessen wird und daß die so gemessenen Frequenzänderungen df jeweils in eine Umwerteformel der Form

$$HV = G(df, a, R_o, b) \quad (1)$$

eingesetzt werden, in der a eine probenunabhängige, apparative Konstante, $R_o$ die Reaktanz der Probe und b ein den Elastizitätsmodul E und die Querkontraktionszahl $\mu$ enthaltender Term sind, wobei sich eine der Zahl der Prüfkräfte entsprechende Anzahl von linearen Gleichungen ergibt, aus denen einerseits entweder der Härtewert HV bei bekanntem Term b oder der Term b bei bekanntem Härtewert HV unabhängig von der Reaktanz $R_o$ oder andererseits die Reaktanz $R_o$ bei bekanntem Härtewert HV oder bekanntem Term b ermittelt wird.

2. Verfahren nach Anspruch 1, dadurch gekennzeichnet, daß der Eindringkörper zunächst mit einer ersten Prüfkraft (z. B. 3N) gegen die Probe gedrückt wird und die zugehörige Frequenzänderung df gemessen wird und anschließend die Prüfkraft auf einen höheren Wert (z. B. 10 N) erhöht und die zugehörige Frequenzänderung df gemessen wird.

3. Verfahren nach Anspruch 2, dadurch gekennzeichnet, daß die Prüfkraft für einen Eindruck entweder kontinuierlich oder in zwei oder mehr Schritten erhöht wird.

4. Verfahren nach Anspruch 1, dadurch gekennzeichnet, daß zusätzlich eine Härtemessung durchgeführt wird, insbesondere eine optische Auswertung der erzeugten Prüfeindrücke des Eindringkörpers auf der Probe.

5. Verfahren nach Anspruch 1 mit mindestens zwei Sonden für unterschiedliche Prüfkräfte, dadurch gekennzeichnet, daß an mindestens zwei unterschiedlichen Orten der Probe gemessen wird.

6. Verfahren nach einem der Ansprüche 1 bis 5, dadurch gekennzeichnet, daß der stabförmige Resonator in einer Sonde (20) angeordnet ist, der ein Elektromotor (32) für die Auf- und Abwärtsbewegung in ihrer Längsrichtung zugeordnet ist, wobei die vom Elektromotor (32) erzeugte Kraft schrittweise oder kontinuierlich erhöht wird.

7. Verfahren nach einem der Ansprüche 1 - 5, dadurch gekennzeichnet, daß der stabförmige Resonator in einer Sonde (20) angeordnet ist, und daß Gewichte vorgesehen sind, die zur Erhöhung der Prüfkraft auf die Sonde (20) aufgelegt werden, wobei das Auflegen vorzugsweise durch motorische Absenkung der Gewichte erfolgt.

**Claims**

1. Method of measuring hardness or elastic material properties under loads by the ultrasonic contact-impedance method, in which a rod-shaped resonator, one end of which holds an indentation body, is pressed against a test specimen with a given test force, so that the indentation body penetrates the specimen, and the resulting change df in the frequency f of the resonator is measured, and then this value is used in a conversion formula to determine the modulus of elasticity E when the hardness value HV and the Poisson ratio $\mu$ are known or to determine the hardness value HV when the modulus of elasticity E and the Poisson ratio $\mu$ are known, characterized by the fact that the test is performed by measuring the frequency change df at at least two different test forces and substituting the frequency changes df measured in this way into a conversion formula of the following form:

$$HV = G(df, a, R_o, b) \quad (1)$$

in which a is a specimen-independent, apparatus-related constant, $R_o$ is the reactance of the test specimen and b is a term containing the modulus of elasticity E and the Poisson ratio $\mu$, such that a number of linear equations corresponding to the number of test forces is obtained, from which it is possible to determine, on the one hand, either the hardness value HV with known term b or term b with known hardness value HV independently of the reactance $R_o$, or, on the other hand, the reactance $R_o$ with known hardness value HV and known term b.

2. Method in accordance with Claim 1, characterized by the fact that the indentation body is first pressed against the test specimen with a first test force (e.g., 3 N), and the accompanying frequency shift df is measured, and then the test force is increased (e.g., to 10 N), and the accompanying frequency shift df is measured.

3. Method in accordance with Claim 2, characterized by the fact that the test force for an impression is increased either continuously or in two or more steps.

4. Method in accordance with Claim 1, characterized by the fact that, in addition, a hardness measurement is performed, especially an optical evaluation of the test impressions produced in the test specimen by the indentation body.

5. Method in accordance with Claim 1 with at least two probes for different test forces, characterized by the fact that the test specimen is measured in at least two different places.

6. Apparatus for performing the method in accordance with any of Claims 1 to 5 with a probe (20), to which an electric motor (32) is assigned for up and down movement of the probe in its longitudinal direction, such that the force produced by the electric motor (32) is increased incrementally or continuously.

7. Apparatus for performing the method in accordance with any of Claims 1 to 5 with a probe (20), characterized by the fact that weights are provided, which can be placed on the probe to increase the test force, preferably by lowering the weights onto the probe by means of a motor.

## Revendications

1. Procédé pour mesurer la dureté ou les propriétés élastiques de matériau sous sollicitation selon la méthode d'impédance à contact ultrason où un résonateur en forme de barre portant un poinçon à une extrémité libre est pressé contre un échantillon à mesurer, le poinçon pénétrant dans l'échantillon et la modification ainsi provoquée df de la fréquence f du résonateur étant mesurée et, à partir de cela, la valeur de dureté HV (voire du module E) est calculée par l'intermédiaire d'une formule de translation utilisant des valeurs connues pour le module d'élasticité E (voire pour la valeur de dureté HV) et le coefficient de contraction transversale $\mu$ de l'échantillon, caractérisé en ce que, pour l'échantillon, la modification de fréquence df est mesurée pour au moins deux forces test différentes et que les modifications de fréquence df ainsi mesurées sont utilisées respectivement dans une formule de translation de la forme

$$HV = G(df, a, R_o, b) \quad (1)$$

dans laquelle a est une constante d'appareil, indépendante de l'échantillon, $R_o$ la réactance de l'échantillon et b un terme contenant le module d'élasticité E et le coefficient de contraction transversale $\mu$, il en ressort un nombre correspondant au nombre des forces test d'équations linéaires à partir desquelles on calcule, d'un côté, soit la valeur de dureté HV pour un terme connu b soit le terme b pour une valeur de dureté HV connue indépendamment de la réactance $R_o$ ou d'un autre côté, la réactance $R_o$ pour une valeur de dureté HV connue ou pour un terme b connu.

2. Procédé selon la revendication 1, caractérisé en ce que le poinçon est pressé tout d'abord avec une première force test (p. ex. 3 N) contre l'échantillon et que la modification de fréquence correspondante df est mesurée et qu'ensuite la force test est portée à une valeur supérieure (p. ex. 10 N) et que la modification de fréquence correspondante df est mesurée.

3. Procédé selon la revendication 2, caractérisé en ce que la force test est augmentée pour une impression soit continuellement soit en deux ou plusieurs étapes.

4. Procédé selon la revendication 1, caractérisé en ce qu'en plus, une mesure de dureté est effectuée, en particulier une appréciation optique des impressions test produites du poinçon sur l'échantillon.

5. Procédé selon la revendication 1 avec au moins deux sondes pour différentes forces test, caractérisé en ce que la mesure est effectuée à au moins deux endroits de l'échantillon.

6. Procédé selon l'une des revendications 1 à 5 caractérisé en ce que le résonateur en forme de barre est placé dans une sonde (20) à laquelle est coordonné un moteur électrique (32) pour le mouvement de montée et de descente dans sa longeur, la force générée par le moteur électrique (32) étant augmentée pas à pas ou en continu.

7. Procédé selon l'une des revendications 1 à 5, caractérisé en ce que le résonateur en forme de barre est placé dans une sonde (20) et en ce que sont prévus des poids appliqués sur la sonde (20) pour augmenter la force test, l'application s'effectuant de préférence par la descente par moteur des poids.

# FIG. 1

# FIG. 2